## Europäisches Patentamt
## European Patent Office
## Office européen des brevets

(19)

(11) Numéro de publication: **0 026 713**
**A2**

(12) # DEMANDE DE BREVET EUROPEEN

(21) Numéro de dépôt: **80401375.3**

(22) Date de dépôt: **29.09.80**

(51) Int. Cl.³: **B 62 K 11/02**

(30) Priorité: **01.10.79 FR 7924397**

(43) Date de publication de la demande:
**08.04.81 Bulletin 81/14**

(84) Etats Contractants Désignés:
**AT DE IT SE**

(71) Demandeur: **Plisson, Jean-Lionel**
**33 bis, rue des Camélias**
**F-94140 Alfortville(FR)**

(72) Inventeur: **Plisson, Jean-Lionel**
**33 bis, rue des Camélias**
**F-94140 Alfortville(FR)**

(74) Mandataire: **Rodhain, Claude**
**Cabinet Claude RODHAIN 30, rue La Boétie**
**F-75008 Paris(FR)**

(54) **Cadre de motocyclette à renfort de colonne de direction.**

(57) Ce cadre est du type comprenant une colonne de direction 1 inclinée vers l'arrière et à partir de laquelle s'étendent un demi-cadre supérieur 2 et un demi-cadre inférieur 3 qui se rejoignent à leurs extrémités arrière et inférieures, des moyens 6 de renfort de la colonne de direction étant par ailleurs disposés entre cette colonne et les deux demi-cadres.

Il est caractérisé en ce que les moyens de renfort 6 comprennent au moins une partie centrale 6a constituée par une pièce transversale à peu près plate, disposée perpendiculairement au plan moyen du cadre et s'étendant entre la colonne de direction 1 et le demi-cadre inférieur 4 sur lesquels elle est fixée rigidement.

./...

EP 0 026 713 A2

**0026713**

Cadre de motocyclette à renfort de colonne de direction
---

La présente invention concerne les cadres pour motocyclettes à renfort de colonne de direction et plus particulièrement les cadres du type comprenant une colonne de direction inclinée vers l'arrière et à partir de laquelle s'étendent un demi-cadre, ou berceau, supérieur et un demi-cadre, ou berceau, inférieur qui se rejoignent à leurs extrémités arrière et inférieures, des moyens de renfort de la colonne de direction étant par ailleurs disposés entre cette colonne et les deux demi-cadres, le demi-cadre, ou berceau inférieur pouvant être soit simple, soit double suivant les cas.

Les moyens de renfort de la colonne de direction ont pour rôle de s'opposer au basculement vers l'arrière de celle-ci, dû à la charge et aux efforts auxquels le cadre est soumis en service, et par conséquent à la torsion longitudinale du cadre que ce basculement occasionne.

On connaît déjà des cadres de ce type dans lesquels les moyens de renfort sont constitués soit par deux flans latéraux métalliques, très approximativement triangulaires, soudés latéralement sur le cadre, de part et d'autre de celui-ci, à la fois sur la colonne de direction et sur les deux demi-cadres, ceci en général dans les cas où le berceau inférieur est double, soit par un flan métallique à peu près triangulaire unique et central soudé entre la colonne de direction et les deux berceaux lorsque le berceau inférieur est simple. Dans le premier cas, les deux renforts latéraux, qui sont d'ailleurs en général dissymétriques, sont rigidifiés entre eux soit par des éléments transversaux, qui ne prennent appui que sur ces renforts, soit par pincement.

Toutefois, dans tous les cas, ces renforts s'étendent longitudinalement, c'est-à-dire suivant un ou des plans voisins du plan vertical moyen du cadre, de sorte qu'il n'agissent pas directement sur la colonne de direction elle-même, ce qui entraîne une efficacité relativement faible de ces moyens de renfort ou exige au contraire qu'ils soient surdimensionnés.

C'est pourquoi l'invention a pour but de remédier à cet inconvénient et, à cet effet, elle a pour objet un cadre du type précité, caractérisé en ce que les moyens de renfort comprennent au moins une partie centrale constituée par une pièce transversale à peu près plate, disposée perpendiculairement au plan moyen du cadre et s'étendant entre la colonne de direction et le demi-cadre inférieur sur lesquels elle est fixée rigidement.

Cette pièce plate transversale reçoit donc directement les efforts dus aux contraintes de basculement de la colonne de direction vers l'arrière et s'oppose ainsi de façon beaucoup plus efficace à ce basculement et à la torsion longitudinale résultante du cadre.

Dans un mode de réalisation particulier de l'invention, il peut être avantageusement prévu que les moyens de renfort comprennent également deux parties latérales à peu près plates disposées à peu près parallèlement au plan moyen du cadre et en ce que les parties latérales sont reliées à la partie centrale par leurs bords avant, l'ensemble pouvant par ailleurs être formé par une pièce unique venue de matière, ce qui simplifie considérablement la réalisation et le montage des moyens de renfort considérés.

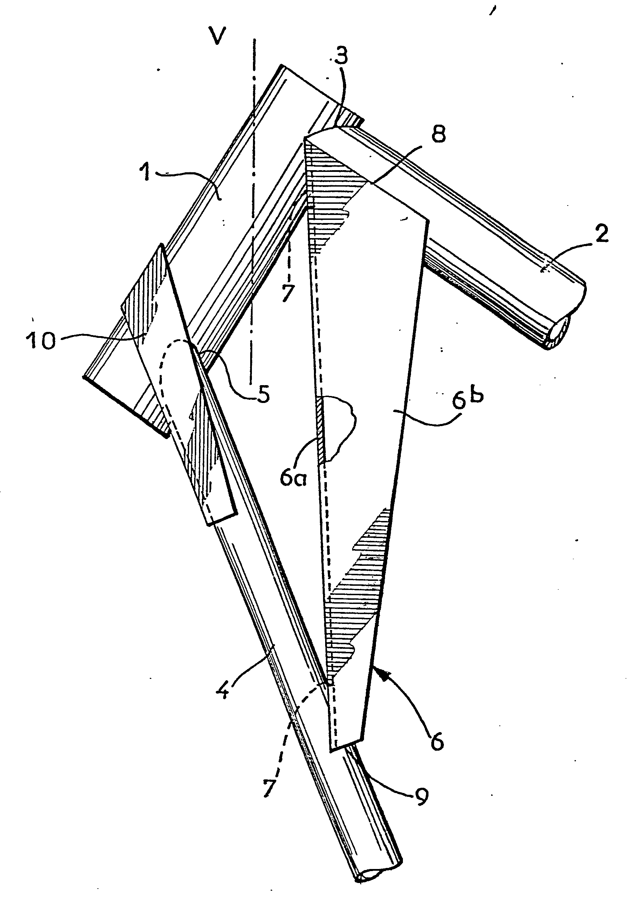

D'autres caractéristiques et avantages de l'invention ressortiront de la description qui va suivre, à titre d'exemple non limitatif et en regard du dessin annexé sur lequel la Figure unique représente une vue de côté, partielle et limitée à sa partie avant, d'un cadre suivant un mode de réalisation particulier conforme à l'invention.

Ce cadre comprend une colonne de direction tubulaire 1 qui est inclinée vers le haut et vers l'arrière par rapport à la verticale V. A partir de cette colonne, s'étendent vers l'arrière, d'une part, un demi-cadre, ou berceau, supérieur 2 constitué par une poutre tubulaire de forte section, cette poutre étant orientée perpendiculairement à la colonne de direction 1 et soudée en 3 sur l'extrémité supérieure de cette colonne dont elle épouse le contour et, d'autre part, un demi-cadre, ou berceau, inférieur 4 constitué de un ou deux tubes de moins forte section que la poutre 2, ce ou ces tubes 4 étant nettement plus inclinés vers l'arrière et vers le bas que la poutre 2, tandis qu'ils sont également soudés en 5 sur l'extrémité inférieure de la colonne 1 dont ils épousent aussi le contour. La poutre 2 et le ou les tubes 4 se rejoignent et sont solidaires entre eux à leurs extrémités arrière et inférieures non représentées.

Il est par ailleurs prévu des moyens de renfort de la colonne de direction qui sont constitués par une pièce métallique 6 à section en U formée par une tôle plane d'assez forte épaisseur et repliée de manière à présenter, d'une part, une partie centrale 6a disposée perpendiculairement au plan moyen du cadre (qui est le plan de la Figure) et, d'autre part, de parties latérales 6b qui sont disposées à peu près parallèlement à ce plan du cadre. Cette pièce 6 est orientée de manière que la partie centrale 6a soit disposée à peu près verticalement, avec toutefois une légère inclinaison vers l'arrière et vers le bas (cette inclinaison n'étant de préférence que de l'ordre de quelques degrés alors que la colonne de direction est inclinée d'environ 30°), tandis que les deux parties latérales 6b s'étendent vers l'arrière du cadre, de sorte que ces parties latérales sont reliées à la partie centrale 6a par leurs bords avant.

Cette pièce 6 est par ailleurs disposée de manière que sa partie centrale 6a s'étende entre l'extrémité supérieure de la colonne de direction 1, au voisinage de la fixation 3 du berceau 2, et une partie du ou des tubes 4 du berceau inférieur située à distance de la fixation 5 de celui-ci sur la colonne.

La partie centrale 6a présente à ses extrémités des échancrures 7 (une à son extrémité supérieure, et une ou deux à son extrémité inférieure) qui lui permettent de venir épouser partiellement le contour de la colonne de direction et du ou des tubes 4 de manière à pouvoir être soudée sur ces différents éléments suivant le bord de ces échancrures. Par ailleurs, les deux parties latérales 6b de cette pièce, qui constituent les ailes du U présentent une hauteur variable qui décroît de l'extrémité supérieure de la pièce à son extrémité inférieure (dans un rapport qui est, par exemple, de l'ordre de 1 à 4) et les deux bords extrêmes supérieurs

**0026713**

8 de ces ailes 6b sont soudés sur la poutre 2 à peu près suivant les génératrices extérieures de celles-ci, tandis que leurs extrémités inférieures 9 sont au contraire soudées sur le ou les tubes 4 extérieurement, mais suivant une direction sensiblement perpendiculaire à leur axe.

Il est enfin prévu une pièce 10 qui ceinture la partie inférieure de la colonne de direction 1 et l'extrémité adjacente du ou des tubes 4, l'ensemble étant soudé de manière à résister à l'arrachement de la partie inférieure de la colonne.

REVENDICATIONS

1. Cadre pour motocyclette à renfort de colonne de direction du type comprenant une colonne de direction inclinée vers l'arrière et à partir de laquelle s'étendent un demi-cadre, ou berceau supérieur et un demi-cadre, ou berceau inférieur qui se rejoignent à leurs extrémités arrière et inférieures, des moyens de renfort de la colonne de direction étant par ailleurs disposés entre cette colonne et les deux demi-cadres, caractérisé en ce que les moyens de renfort (6) comprennent au moins une partie centrale (6a) constituée par une pièce transversale à peu près plate, fixée rigidement par ses deux extrémités opposées respectivement sur le demi-cadre supérieur (2) dans sa zone de jonction (3) avec la colonne de direction (1) et sur le demi-cadre inférieur (4), cette pièce étant sensiblement orienté dans le plan bissec-teur de l'angle formé par la colonne de direction et le demi-cadre supérieur.

2. Cadre pour motocyclette selon la revendication 1, caractérisé en ce que la pièce plate transversale (6a) est fixée sur le demi-cadre inférieur (4) à distance de la fixation (5) de celui-ci sur la colonne de direction (1) et de manière à être inclinée vers le haut et vers l'avant du cadre.

3. Cadre pour motocyclette selon l'une quelconque des revendications 1 et 2, caractérisé en ce que, dans le cas où le demi-cadre supérieur (2) est fixé sur la colonne de direction (1) à son extrémité supérieure, la pièce plate transversale (6a) est également fixée sur cette colonne de direction (1) à son extrémité supérieure et est par ailleurs disposée presqu'à la verticale.

4. Cadre pour motocyclette selon l'une quelconque des revendications de 1 à 3, caractérisé en ce que la pièce plate transversale (6a) comporte à ses deux extrémités des échancrures (7) épousant partiellement le contour du ou des tubes (4) du demi-cadre supérieur et du demi-cadre inférieure et/ou de la colonne de direction.

5. Cadre pour motocyclette selon l'une quelconque des revendications de 1 à 4, caractérisé en ce que la pièce plate transversale (5a) est soudée sur le demi-cadre supérieur au niveau de la jonction avec la colonne de direction (1) et sur le demi-cadre inférieur (4).

6. Cadre pour motocyclette selon l'une quelconque des revendications de 1 à 5, caractérisé en ce que les moyens de renfort (6) comprennent également deux parties latérales (6b) à peu près plates disposées à peu près parallèlement au plan moyen du cadre et en ce que les parties latérales (6b) sont reliées à la partie centrale (6a) par leurs bords avant.

7. Cadre pour motocyclette selon la revendication 6, caractérisé en ce que les parties latérales (6b) des moyens de renfort (6) s'étendent entre le demi-cadre supérieur (2) et le demi-cadre inférieur (4).

8. Cadre pour motocyclette selon l'une quelconque des revendications 6 et 7, caractérisé en ce que la partie centrale (6a) et les deux parties latérales (6b) sont constituées par une pièce à section en U (6).

9. Cadre pour motocyclette selon la revendication 8, caractérisé en ce que la pièce à section en U (6) est une pièce unique venue de matière.

10. Cadre pour motocyclette selon l'une quelconque des revendications 8 et 9, caractérisé en ce que la hauteur des ailes ou parties latérales (6b) de la pièce en U est décroissante de son extrémité supérieure à son extrémité inférieure.